# EUROPÄISCHE PATENTSCHRIFT

(11) **EP 3 299 639 B1**
(45) Veröffentlichungstag und Bekanntmachung des Hinweises auf die Patenterteilung: **22.07.2020**
(21) Anmeldenummer: 16190333.1
(22) Anmeldetag: 23.09.2016
(51) Int. Cl.: F16B 5/02, F16B 43/00

(54) **AUSGLEICHSELEMENT UND SYSTEM ZUR SCHWINGUNGSDÄMPFUNG**
COMPENSATION ELEMENT AND SYSTEM FOR VIBRATION DAMPENING
ÉLÉMENT DE COMPENSATION ET SYSTÈME D'AMORTISSEMENT DES VIBRATIONS

(43) Veröffentlichungstag der Anmeldung: 28.03.2018
(73) Patentinhaber: E. Hawle Armaturenwerke GmbH, 4840 Vöcklabruck (AT)
(72) Erfinder: Jodlbauer, Johann, 4844 REGAU (AT)
(74) Vertreter: Puchberger & Partner Patentanwälte

(56) Entgegenhaltungen:
- DE-A1- 3 937 339
- DE-U1- 9 412 946
- GB-A- 1 009 529
- GB-A- 2 340 794

## Beschreibung

Die Erfindung betrifft ein Ausgleichselement und ein System zur Schwingungsdämpfung gemäß Oberbegriff des unabhängigen Anspruchs.

Aus der DE 94 12 946 U1 ist eine schwingungsdämpfende Buchse bekannt.

Ausgleichselemente und Systeme umfassend solche Ausgleichselemente, welche zum Schutz eines Bauteils, insbesondere eines hochwertigen Bauteils, bei der Montage und zum Toleranzausgleich eingerichtet sind, sind aus dem Stand der Technik bekannt.

Ein wesentliches Problem bei der Befestigung mehrerer Bauteile aneinander besteht darin, dass die zu befestigenden Bauteile oft erhebliche Toleranzen aufweisen, sodass eine gleichförmige Befestigung schwierig ist. Außerdem können die Bauteile vor ihrer Befestigung in der Regel nur lose bzw. nicht fixiert angeordnet werden. Bei der Montage müssen also die Bauteile jeweils extern fixiert oder gehalten werden, um ein "Auseinanderfallen" zu verhindern. Diese externe Fixierung ruft bei großen und schweren Bauteilen, insbesondere bei Bauteilen, die ein derart hohes Gewicht aufweisen, dass sie nur maschinell manipuliert werden können, einen sehr hohen maschinellen und operativen Aufwand hervor.

Somit ist es mit herkömmlichen Ausgleichselementen und herkömmlichen Systemen nicht möglich den Bauteil bei der Montage zu schützen und eine Beschädigung des Bauteils ist nicht ausgeschlossen. Dadurch ist mit herkömmlichen Ausgleichselementen und herkömmlichen Systemen keine rasche beschädigungsfreie Montage möglich. Aufgabe der Erfindung ist nun, die Nachteile des Standes der Technik zu überwinden.

Insbesondere ist es Aufgabe der Erfindung, ein Ausgleichselement zur Schwingungsdämpfung, zum Toleranzausgleich und zum Schutz eines Bauteils zu schaffen. Dieses Ausgleichselement soll unter anderem dazu eingerichtet sein, einen ersten Bauteil, insbesondere einen hochwertigen Bauteil, an einem zweiten Bauteil effizient und beschädigungslos in einer definierten Stellung zu montieren bzw. zu befestigen. Weiters ist es Aufgabe der Erfindung ein Ausgleichselement zu schaffen, mit dem allfällige Toleranzen oder ein vorhandenes Spiel zwischen dem ersten Bauteil und dem zweiten Bauteil ausgeglichen werden kann. Insbesondere soll ein Ausgleichselement geschaffen werden, welches es ermöglicht, die Lage des Bauteils vor der Befestigung ohne externe Vorrichtungen zu fixieren.

Diese und andere Aufgaben werden insbesondere durch die Merkmale des unabhängigen Patentanspruchs gelöst. Das erfindungsgemäße Ausgleichselement zum Toleranzausgleich, zum Schutz und zur Schwingungsdämpfung bei der Befestigung eines ersten Bauteils an einem zweiten Bauteil ist zur Anordnung zwischen dem ersten Bauteil und dem zweiten Bauteil ausgebildet. An einem äußeren Umfang des Ausgleichselements ist eine Wulst und eine erste, insbesondere konische oder gewölbte, Aktivierungsfläche vorgesehen, die zur Zusammenwirkung mit einem Vorsprung und einer zweiten, insbesondere konischen oder gewölbten, Aktivierungsfläche an einem inneren Umfang des ersten Bauteils ausgeführt ist, sodass der erste Bauteil in einer ersten Position, insbesondere vor der Befestigung, formschlüssig mit dem Ausgleichselement in Eingriff bringbar ist.

Indem die Wulst des Ausgleichselements mit dem Vorsprung des Bauteils verrastet und die erste Aktivierungsfläche mit der zweiten Aktivierungsfläche zusammenwirkt, ist die Bewegung des ersten Bauteils entlang seiner Längsachse eingeschränkt. Dadurch wird eine Fixierung des ersten Bauteils am Ausgleichselement ohne externe Fixiereinrichtungen ermöglicht.

Erfindungsgemäß kann insbesondere vorgesehen sein, dass das Ausgleichselement im Wesentlichen ringförmig oder spiralförmig ausgeführt ist. Das Ausgleichselement kann aber auch andere Formen aufweisen, welche an die Form der zu schützenden Bauteile angepasst sein können.

Gegebenenfalls ist vorgesehen, dass die erste Aktivierungsfläche in Richtung einer ersten Öffnung des Ausgleichselements auseinander läuft und somit die Bewegung des ersten Bauteils entlang seiner Längsachse in Richtung der ersten Öffnung begrenzt. Gegebenenfalls ist vorgesehen, dass der mit der Wulst des Ausgleichselement verrastete Vorsprung des ersten Bauteils die Bewegung des ersten Bauteils entlang seiner Längsachse in Richtung einer zweiten Öffnung begrenzt. Durch die gewölbte oder konische Ausbildung der Flächen wird unter anderem ein besseres Zusammenwirken des ersten Bauteils und des Ausgleichselements ermöglicht.

Gegebenenfalls ist vorgesehen, dass ein Teil der ersten Aktivierungsfläche des äußeren Umfangs des Ausgleichselements zur Zusammenwirkung mit einem Teil der zweiten Aktivierungsfläche des inneren Umfangs des ersten Bauteils ausgeführt ist, sodass in einer zweiten Position des ersten Bauteils, insbesondere nach der Befestigung, dieser Teil der ersten Aktivierungsfläche gegen den Teil der zweiten Aktivierungsfläche gedrückt wird. Durch dieses Zusammenwirken des Ausgleichselements mit dem ersten Bauteil kann unter anderem das Ausgleichselement verformt werden und sich an den zweiten Bauteil anpassen. Ferner wird dadurch eine kraftschlüssige Verbindung erreicht. Somit können die Bauteile zueinander nur mehr gedämpft verrutschen oder nur mit extremem Kraftaufwand zueinander verschoben werden.

Gegebenenfalls ist vorgesehen, dass an einem inneren Umfang des Ausgleichselements eine Anliegefläche derart angeordnet ist, dass sie in der zweiten Position des ersten Bauteils durch das erste Bauteil gegen den zweiten Bauteil gepresst wird. Dadurch wird das Ausgleichselement in der zweiten Position des ersten Bauteils an den zweiten Bauteil gepresst, wodurch unter anderem Toleranzen zwischen dem ersten Bauteil und dem zweiten Bauteil ausgeglichen werden können. Ferner wird ein besserer Kraftschluss erreicht und/oder ein Verrutschen der Bauteile zueinander ist nur mehr gedämpft oder mit hohem Kraftaufwand möglich. Ferner werden dadurch unter anderem Schwingungen gedämpft.

Gegebenenfalls ist vorgesehen, dass an einem inneren Umfang des Ausgleichselements eine erste, insbesondere konische, Stauraumfläche vorgesehen ist, sodass zwischen dem Ausgleichselement und dem zweiten Bauteil ein erster Freiraum gebildet ist. Durch diesen ersten Freiraum können insbesondere Toleranzen bei der Fertigung, insbesondere Schweißnähte, konstruktionsbedingte Vorsprünge oder dergleichen ausgeglichen werden. Ferner dient diese erste Stauraumfläche auch als Positionierhilfe und/oder Einführhilfe bei der Montage.

Gegebenenfalls ist vorgesehen, dass am Ausgleichselement mindestens ein Abstandshalter, insbesondere mindestens eine Noppe, stirnseitig im Bereich einer ersten Öffnung des Ausgleichselements vorgesehen ist. Dadurch ist ein Freiraum zwischen dem Ausgleichselement und einer Platte oder dergleichen gebildet. Dieser Abstandshalter hat bevorzugt die Form eines Halbkreises. Dadurch wird unter anderem der Reibungswiderstand zwischen dem Ausgleichselement und der Platte oder dergleichen verkleinert und die Verformbarkeit des Ausgleichselements erleichtert.

Erfindungsgemäß ist vorgesehen, dass am äußeren Umfang des Ausgleichselements alternierend Stege und Mulden vorgesehen sind, oder dass das Ausgleichselement aus Stegen und Mulden gebildet ist. Insbesondere sind mindestens zwei, drei, vier, fünf, sechs, sieben, acht, neun, zehn oder dergleichen Stege und Mulden am Ausgleichselement vorgesehen. Insbesondere kann das Ausgleichselement aus mindestens zwei, drei, vier, fünf, sechs, sieben, acht, neun, zehn oder dergleichen Stegen und Mulden gebildet sein. Dadurch ist unter anderem eine Verformung des Ausgleichselements, insbesondere wenn der erste Bauteil von seiner ersten Position in seine zweite Position gebracht wird, leichter möglich, da der Verformung weniger Material entgegensteht. Erfindungsgemäß ist vorgesehen, dass die Wulst und die erste Aktivierungsfläche nur an den Stegen des Ausgleichselements vorgesehen sind.

Gegebenenfalls ist vorgesehen, dass das Ausgleichselement symmetrisch um eine Längsachse aufgebaut ist, wobei die Anliegefläche vorzugsweise im Wesentlichen parallel zur Längsachse ist. Gegebenenfalls ist vorgesehen, dass die erste Stauraumfläche einen Winkel von 5° bis 25°, vorzugsweise 10° bis 20°, besonders bevorzugt 15° mit der Längsachse einschließt. Vorzugsweise kann das Ausgleichselement elastisch verformbar sein, sodass es sich bei der Befestigung verformen kann und nach der Lösung der Befestigung seine ursprüngliche Form wieder einnimmt. Erfindungsgemäß kann das Ausgleichselement aus Kunststoff, insbesondere Gummi oder Polyethylen, Metall, insbesondere Federstahl, oder dergleichen ausgeführt sein. Das Ausgleichselement kann auch aus einer Kombination dieser Materialien gebildet sein.

Erfindungsgemäß kann vorgesehen sein, dass das Ausgleichselement durch ein im Wesentlichen ringförmiges Bauteil mit einem sich konisch erweiternden äußeren Umfang gebildet ist. Das Ausgleichselement kann aber auch einen mehreckigen, insbesondere sechseckigen, achteckigen oder zwölfeckigen äußeren Umfang aufweisen.

Erfindungsgemäß kann ebenfalls vorgesehen sein, dass das Ausgleichselement durch ein spiralförmiges Materialband gebildet ist, welches derart angeordnet ist, dass der äußere Umfang des Materialbandes eine sich konisch erweiternde teilweise Umfangsfläche bildet. Das Ausgleichselement kann auch ein derartiges spiralförmiges Materialband oder eine Kombination aus einem ringförmigen und einem spiralförmigen Materialband umfassen. Das spiralförmige Materialband kann insbesondere aus Federstahl hergestellt sein oder Federstahl umfassen; es kann jedoch auch aus den genannten Materialien hergestellt sein oder diese umfassen. Die oben beschriebenen Merkmale des Ausgleichselements können auch kombiniert werden. So kann das Ausgleichselement insbesondere auch als spiralförmiges Materialband mit einem Wulst und mehreren, am äußeren Umfang alternierend angeordneten Stegen und Mulden ausgeführt sein. In der Ausführungsform als Materialband können die oben beschriebenen Flächen jeweils durch abschnittsweise Flächen der Innen- oder Außenseite des Materialbandes gebildet sein.

Weiters ist es Aufgabe der Erfindung, ein System umfassend das erfindungsgemäße Ausgleichselement und den oben näher beschriebenen dazugehörigen ersten Bauteil zu schaffen.

Insbesondere soll durch das Ausgleichselement des Systems die Öffnung des ersten Bauteils während der gesamten Montage geschützt werden und somit eine Beschädigung des ersten Bauteils durch einen zweiten Bauteil verhindert werden.

Gegebenenfalls ist vorgesehen, dass am inneren Umfang des ersten Bauteils im Anschluss an den Vorsprung eine, insbesondere zurückgesetzte, zweite Stauraumfläche vorgesehen ist, sodass zwischen dem Ausgleichselement und dem ersten Bauteil ein zweiter Freiraum gebildet ist.

Gegebenenfalls ist vorgesehen, dass der erste Bauteil und/oder der zweite Bauteil symmetrisch um die Längsachse sind.

Gegebenenfalls ist vorgesehen, dass die zweite Stauraumfläche im Wesentlichen parallel zur Längsachse verläuft, oder dass die zweite Stauraumfläche einen Winkel von 0° bis 10°, bevorzugt 0° bis 5°, besonders bevorzugt 3°, mit der Längsachse einschließt.

Weitere erfindungsgemäße Merkmale ergeben sich aus den Ansprüchen, der Beschreibung der Ausführungsbeispiele und den Figuren.

Die Erfindung wird nun am Beispiel exemplarischer, nicht ausschließlicher, Ausführungsbeispiele erläutert.

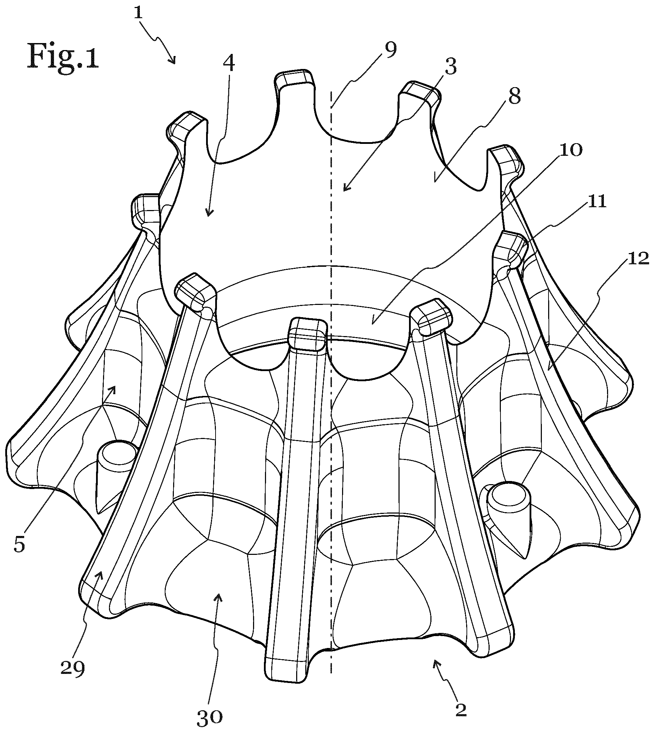

Fig. 1 zeigt eine schematische dreidimensionale Darstellung einer ersten Ausführungsform eines erfindungsgemäßen Ausgleichselements 1. Das Ausgleichselement 1 ist ringförmig und weist eine erste Öffnung 2 und eine zweite Öffnung 3 sowie einen inneren Umfang 4 und einen äußeren Umfang 5 auf. Das Ausgleichselement 1 ist zur Anordnung zwischen einem ersten Bauteil 6 und einem zweiten Bauteil 7 ausgebildet. Das Ausgleichselement 1 ist aus neun Stegen 29 und neun Mulden 30 gebildet.

Die Stege 29 und Mulden 30 sind alternierend am äußeren Umfang 5 des Ausgleichselements 1 angeordnet. Aus dieser Abbildung ist ersichtlich, dass am inneren Umfang 4 des Ausgleichselements 1 beziehungsweise an den Stegen 29 und Mulden 30 des Ausgleichselements eine Anliegefläche 8 gebildet ist. Diese Anliegefläche 8 ist im Wesentlichen parallel zur Längsachse 9 des Ausgleichselements 1. Im Anschluss an die Anliegefläche 8 ist eine erste Stauraumfläche 10 gebildet. Die erste Stauraumfläche 10 läuft konisch in Richtung der ersten Öffnung 2 des Ausgleichselements 1 auseinander.

In dieser Ausführungsform sind eine Wulst 11 und eine erste Aktivierungsfläche 12 nur an den Stegen 29 des Ausgleichselements 1 vorgesehen. Die erste Aktivierungsfläche 12 ist gewölbt ausgebildet und läuft in Richtung der ersten Öffnung 2 des Ausgleichselements 1 auseinander.

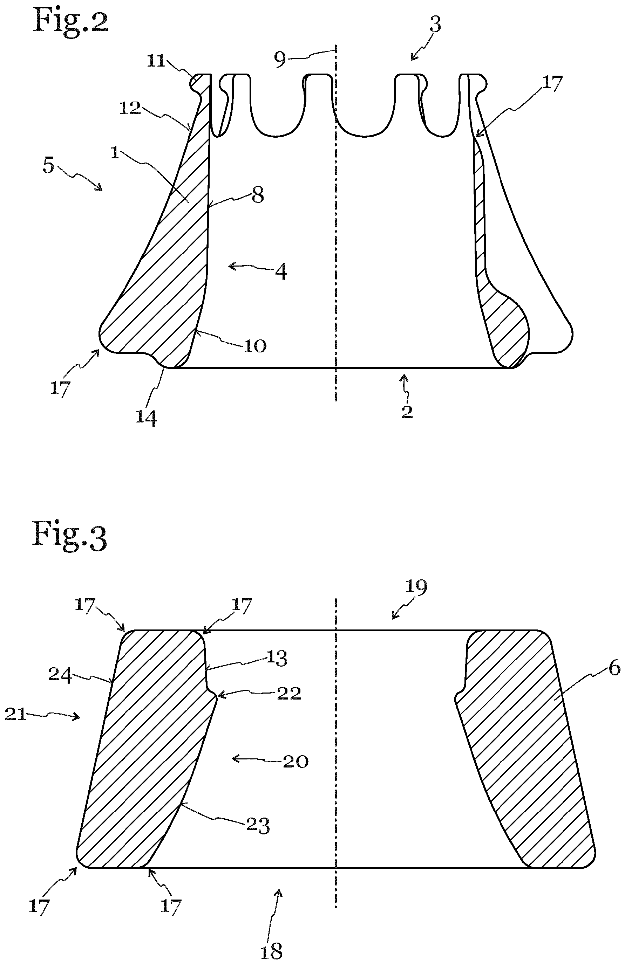

Fig. 2 zeigt eine schematische Darstellung eines Seitenrisses der Fig. 1. Am inneren Umfang 4 des Ausgleichselements 1 ist die Anliegefläche 8 und im Anschluss an die Anliegefläche 8 die erste Stauraumfläche 10 gebildet. Diese Anliegefläche 8 ist im Wesentlichen parallel zur Längsachse 9 des Ausgleichselements 1. Die erste Stauraumfläche 10 läuft konisch in Richtung der ersten Öffnung 2 des Ausgleichselements 1 auseinander. Die Anliegefläche 8 und die erste Stauraumfläche 10 verlaufen winkelig zueinander, wobei winkelig in allen Ausführungsformen einen Winkel beschreibt, der größer 0° ist. Die erste Stauraumfläche 10 schließt einen Winkel von etwa 15° mit der Längsachse 9 ein. Am Ausgleichselement 1 ist ein Abstandshalter 14, welcher in dieser Ausführungsform als Noppe ausgebildet ist, stirnseitig im Bereich der ersten Öffnung 2 des Ausgleichselements 1 angeordnet. Der Abstandshalter 14 ist in dieser Ausführungsform an den Stegen 29 und den Mulden 30 des Ausgleichselements 1 angeordnet. Dadurch wird bei Verwendung zwischen dem Ausgleichselement 1 und einer Platte 15 oder dergleichen ein dritter Freiraum 16 gebildet.

Am äußeren Umfang 5 des Ausgleichselements 1 ist an den Stegen 29 im Bereich der zweiten Öffnung 3 eine Wulst 11 angeordnet. Die Wulst 11 weist die Form einer länglichen gerundeten Verdickung auf. Im Anschluss an die Wulst 11 ist eine erste Aktivierungsfläche 12 an den Stegen 29 gebildet.

Die erste Aktivierungsfläche 12 ist in dieser Ausführungsform gewölbt ausgebildet und läuft in Richtung der ersten Öffnung 2 des Ausgleichselements 1 auseinander. Die Wulst 11 und die erste Aktivierungsfläche 12 der Stege 29 des Ausgleichselements 1 sind zum Zusammenwirken mit einem Vorsprung 22 und einer zweiten Aktivierungsfläche 23 des ersten Bauteil 6 ausgeführt. Im Anschluss an die erste Aktivierungsfläche 12 ist im Bereich der ersten Öffnung 2 an den Stegen 29 des Ausgleichselements 1 eine Fase 17, insbesondere eine Einlaufschräge oder Rundung, angeordnet. Im Bereich der zweiten Öffnung 3 des Ausgleichselements 1 sind an den Mulden 30 des Ausgleichselements 1 Fasen 17, insbesondere Rundungen, angeordnet.

Fig. 3 zeigt eine schematische Darstellung einer ersten Ausführungsform des ersten Bauteils 6. Der erste Bauteil 6 weist eine erste 18 und eine zweite Öffnung 19 und einen inneren Umfang 20 sowie einen äußeren Umfang 21 auf. Am inneren Umfang 20 und am äußeren Umfang 21 sind im Bereich der ersten Öffnung 18 und der zweiten Öffnung 19 Fasen 17 angeordnet. Am inneren Umfang 20 ist eine zweite Stauraumfläche 13 angeordnet. Die zweite Stauraumfläche 13 schließt mit der Längsachse 9 einen Winkel von etwa 3° ein. Im Anschluss an die zweite Stauraumfläche 13 ist ein Vorsprung 22 gebildet. Im Anschluss an den Vorsprung 22 ist eine zweite Aktivierungsfläche 23 gebildet. Die zweite Aktivierungsfläche 23 ist in dieser Ausführungsform gewölbt ausgebildet und läuft in Richtung der ersten Öffnung 18 des ersten Bauteils 6 auseinander. Am äußeren Umfang 21 des ersten Bauteils 6 ist eine Mantelfläche 24 angeordnet. Die Mantelfläche 24 läuft konisch in Richtung der ersten Öffnung 18 des ersten Bauteils 6 auseinander.

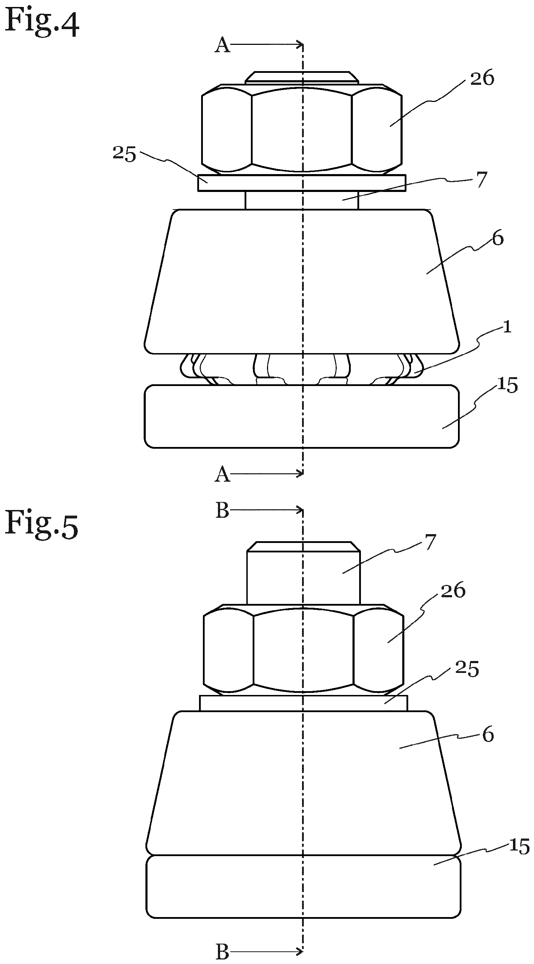

Fig. 4 zeigt eine schematische Darstellung einer ersten Ausführungsform des erfindungsgemäßen Systems vor der Befestigung des ersten Bauteils 6 am zweiten Bauteil 7 bzw. einer Platte 15. Das System umfasst das Ausgleichselement 1 in seiner ersten Ausführungsform, welches in Fig. 1 und 2 detailliert dargestellt ist, und den ersten Bauteil 6 in seiner ersten Ausführungsform, welcher in Fig. 3 detailliert dargestellt ist. Der zweite Bauteil 7 ist auf einer Platte 15 angeordnet und als Gewindebolzen ausgeführt. Auf dem zweiten Bauteil 7 sind folgende Elemente in nachfolgender Reihenfolge angeordnet: Ausgleichselement 1, erster Bauteil 6, Scheibe 25 und Mutter 26. Der erste Bauteil 6 befindet sich am Ausgleichselement 1 in seiner ersten Position vor der Befestigung. In dieser Figur ist auch eine Schnittachse A-A eingezeichnet.

Fig. 5 zeigt eine schematische Darstellung des erfindungsgemäßen Systems der Fig. 4, wobei der erste Bauteil 6 am Ausgleichselement 1 in seiner zweiten Position, nach der Befestigung am zweiten Bauteil 7, dargestellt ist. Durch das Festziehen der Mutter 26 wird die Scheibe 25 auf den ersten Bauteil 6 gedrückt. Dadurch wird der erste Bauteil 6 von seiner ersten Position, vor der Befestigung, in seine zweite Position, nach der Befestigung, gebracht. In dieser Figur wird das Ausgleichselement 1 vom ersten Bauteil 6 in seiner zweiten Position verdeckt. In dieser Figur ist auch eine Schnittachse B-B eingezeichnet.

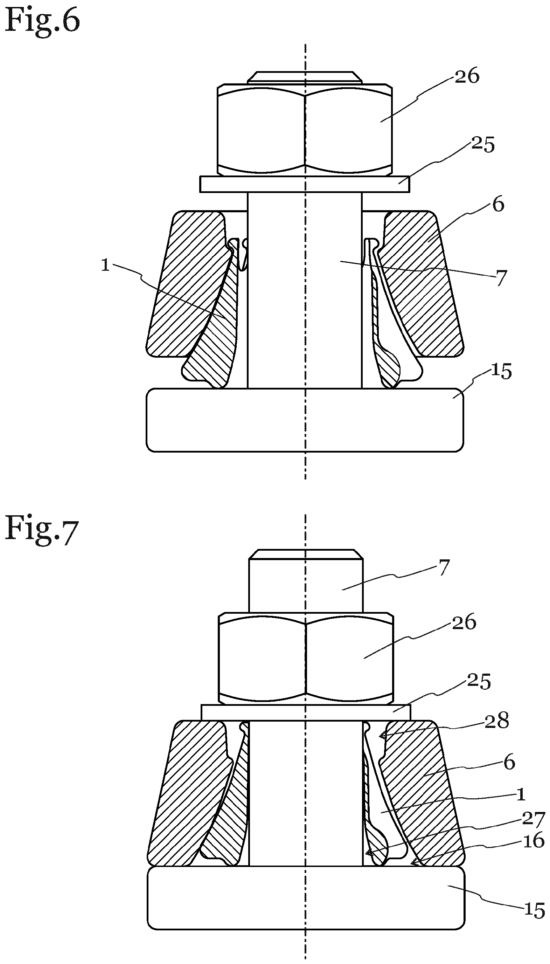

Fig. 6 zeigt eine Schnittdarstellung einer ersten Ausführungsform des erfindungsgemäßen Systems der Fig. 4 entlang der Schnittachse A-A. Die Wulst 11 und die erste Aktivierungsfläche 12 des äußeren Umfangs 5 des Ausgleichselements 1, welche an den Stegen 29 angeordnet sind, und der Vorsprung 22 und die zweite Aktivierungsfläche 23 des inneren Umfangs 20 des ersten Bauteils 6 entsprechen einander in ihrer Form im Wesentlichen. Das Ausgleichselement 1 und der erste Bauteil 6 wirken derart zusammen, dass der erste Bauteil 6 in seiner ersten Position, insbesondere vor der Befestigung, formschlüssig mit dem Ausgleichselement 1 in Eingriff ist. Da die Wulst 11 mit dem Vorsprung 22 verrastet ist und die erste Aktivierungsfläche 12 mit der zweiten Aktivierungsfläche 23 zusammenwirkt, wird die Bewegung des ersten Bauteils 6 entlang seiner Längsachse 9 eingeschränkt.

In dieser Ausführungsform ist vorgesehen, dass die erste Aktivierungsfläche 12 in Richtung der ersten Öffnung 2 des Ausgleichselements 1 auseinander läuft und somit die Bewegung des ersten Bauteils 6 entlang seiner Längsachse 9 in Richtung der ersten Öffnung 18 begrenzt. In die andere Richtung begrenzt der mit der Wulst 11 der Stege 29 des Ausgleichselements 1 verrastete Vorsprung 22 des ersten Bauteils 6 die Bewegung des ersten Bauteils 6 entlang seiner Längsachse 9. Somit ist der erste Bauteil 6 am Ausgleichselement 1 in seiner ersten Position fixiert und eine Beschädigung des ersten Bauteils 6 durch den zweiten Bauteil 7 wird verhindert.

Fig. 7 zeigt eine Schnittdarstellung einer ersten Ausführungsform des erfindungsgemäßen Systems der Fig. 5 entlang der Schnittachse B-B. Der erste Bauteil 6 befindet sich in seiner zweiten Position nach der Befestigung.

Das Ausgleichselement 1 und der erste Bauteil 6 wirken derart zusammen, dass ein Teil der ersten Aktivierungsfläche 12 des äußeren Umfangs 5 des Ausgleichselements 1, welche an den Stegen 29 angeordnet ist, gegen einen Teil der zweiten Aktivierungsfläche 23 des inneren Umfangs 20 des ersten Bauteils 6 gedrückt wird. Dadurch wird die Anliegefläche 8 des inneren Umfangs 4 des Ausgleichselements 1, welche an den Stegen 29 und den Mulden 30 angeordnet ist, an den zweiten Bauteil 7 gepresst. Das Ausgleichselement 1 ist elastisch verformbar und verformt sich dadurch nach innen.

Am inneren Umfang 4 des Ausgleichselements 1 ist die erste Stauraumfläche 10 an den Stegen 29 und Mulden 30 angeordnet, sodass, wenn der erste Bauteil 6 von seiner ersten in seine zweite Position gebracht wird, ein erster Freiraum 27 zwischen dem zweiten Bauteil 7 und der ersten Stauraumfläche 10 gebildet wird. Am inneren Umfang 20 des ersten Bauteils 6 ist eine zweite Stauraumfläche 13 gebildet, sodass, wenn der erste Bauteil 6 von seiner ersten in seine zweite Position gebracht wird, ein zweiter Freiraum 28 gebildet wird. Am Ausgleichselement 1 ist im Bereich der ersten Öffnung 2 an den Stegen 29 und Mulden 30 stirnseitig ein Abstandshalter 14 angeordnet, wodurch ein dritter Freiraum 16 zwischen der Platte 15 und dem Ausgleichselement 1 gebildet ist.

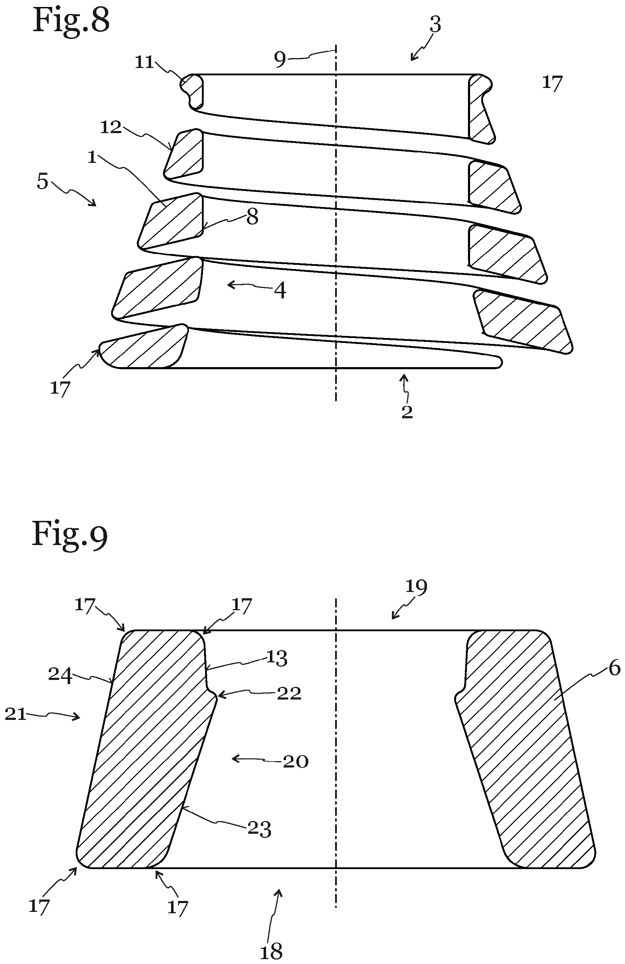

Fig. 8 - Fig. 11 zeigen schematische Darstellungen einer zweiten, nicht erfindungsgemäßen Ausführungsform eines Ausgleichselements 1 und Systems umfassend ein Ausgleichselement 1. In Fig. 8 ist das Ausgleichselement 1 als spiralförmiges und sich kegelig erweiterndes Materialband gebildet, welches elastisch verformbar ist und im Wesentlichen dieselbe Funktion erlaubt wie bei der ringförmigen Ausführung. Der innere Umfang 4 des Ausgleichselements 1 ist durch den abschnittsweisen inneren Umfang des Materialbands gebildet und bildet eine abschnittsweise Anliegefläche 8 und im Anschluss eine abschnittsweise erste Stauraumfläche 10.

Am äußeren Umfang 5 des Ausgleichselements 1 ist eine Wulst 11 angeordnet. Die Wulst 11 weist die Form einer länglichen gerundeten Verdickung auf. Im Anschluss an die Wulst 11 ist eine erste Aktivierungsfläche 12 gebildet, welche durch den äußeren Umfang des Materialbands abschnittsweise verläuft.

Die Verwendung von Stegen und Mulden ist in diesem Ausführungsbeispiel nicht vorgesehen, da bereits durch die Verwendung des spiralförmigen elastischen Materialbandes eine leichte Verformung des Ausgleichselements sichergestellt ist.

Die erste Aktivierungsfläche 12 ist in dieser Ausführungsform im Wesentlichen linear ausgebildet und läuft in Richtung der ersten Öffnung 2 des Ausgleichselements 1 konisch auseinander.

Die Wulst 11 und die erste Aktivierungsfläche 12 sind zum Zusammenwirken mit einem Vorsprung 22 und einer zweiten Aktivierungsfläche 23 des ersten Bauteil 6 ausgeführt.

Fig. 9 zeigt eine schematische Darstellung einer weiteren Ausführungsform des ersten Bauteils 6. Der erste Bauteil 6 weist eine erste 18 und eine zweite Öffnung 19 und einen inneren Umfang 20 sowie einen äußeren Umfang 21 auf. Am inneren Umfang 20 und am äußeren Umfang 21 sind im Bereich der ersten Öffnung 18 und der zweiten Öffnung 19 Fasen 17 angeordnet. Am inneren Umfang 20 ist eine zweite Stauraumfläche 13 angeordnet. Die zweite Stauraumfläche 13 schließt mit der Längsachse 9 einen Winkel von etwa 3° ein. Im Anschluss an die zweite Stauraumfläche 13 ist ein Vorsprung 22 gebildet. Im Anschluss an den Vorsprung 22 ist eine zweite Aktivierungsfläche 23 gebildet. Die zweite Aktivierungsfläche 23 ist in dieser Ausführungsform linear ausgebildet und läuft in Richtung der ersten Öffnung 18 des ersten Bauteils 6 auseinander. Am äußeren Umfang 21 des ersten Bauteils 6 ist eine Mantelfläche 24 angeordnet. Die Mantelfläche 24 läuft konisch in Richtung der ersten Öffnung 18 des ersten Bauteils 6 auseinander.

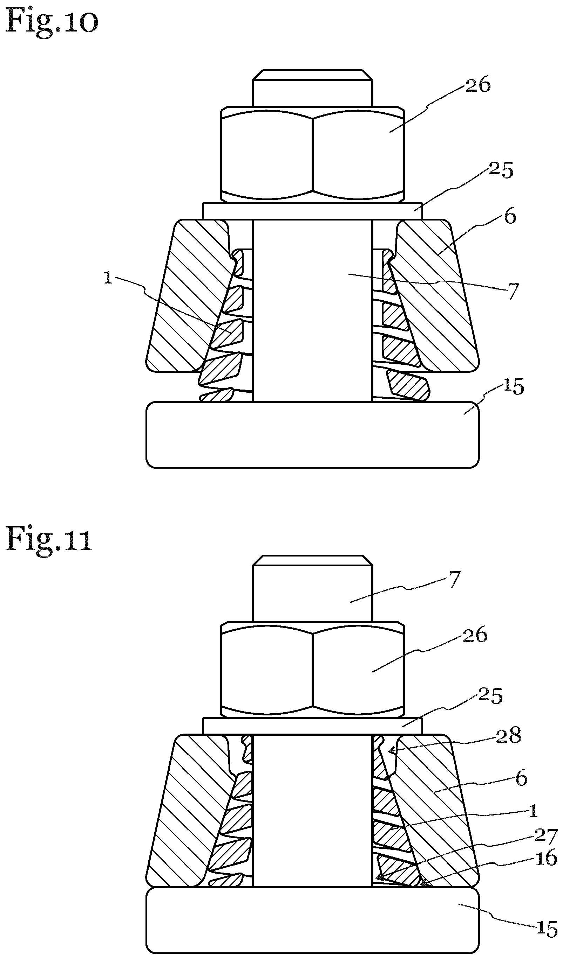

Fig. 10 zeigt eine schematische Schnittansicht einer weiteren Ausführungsform des Systems. Das System umfasst das Ausgleichselement 1 in seiner zweiten Ausführungsform, welches in Fig. 8 dargestellt ist, und den ersten Bauteil 6 in seiner zweiten Ausführungsform, welcher in Fig. 9 dargestellt ist. Der zweite Bauteil 7 ist auf einer Platte 15 angeordnet und als Gewindebolzen ausgeführt. Der erste Bauteil 6 befindet sich am Ausgleichselement 1 in seiner ersten Position vor der Befestigung.

Die Wulst 11 und die erste Aktivierungsfläche 12 des äußeren Umfangs 5 des Ausgleichselements 1 und der Vorsprung 22 und die zweite Aktivierungsfläche 23 des inneren Umfangs 20 des ersten Bauteils 6 entsprechen einander in ihrer Form im Wesentlichen. Das Ausgleichselement 1 und der erste Bauteil 6 wirken derart zusammen, dass der erste Bauteil 6 in seiner ersten Position formschlüssig mit dem Ausgleichselement 1 in Eingriff ist. Da die Wulst 11 mit dem Vorsprung 22 verrastet ist und die abschnittsweise erste Aktivierungsfläche 12 mit der zweiten Aktivierungsfläche 23 zusammenwirkt, wird die Bewegung des ersten Bauteils 6 entlang seiner Längsachse 9 eingeschränkt.

Fig. 11 zeigt eine schematische Schnittdarstellung des Systems der Fig. 10, wobei der erste Bauteil 6 am Ausgleichselement 1 in seiner zweiten Position, nach der Befestigung am zweiten Bauteil 7, dargestellt ist. Durch das Festziehen der Mutter 26 wird die Scheibe 25 auf den ersten Bauteil 6 gedrückt. Dadurch wird der erste Bauteil 6 von seiner ersten Position, vor der Befestigung, in seine zweite Position, nach der Befestigung, gebracht. Der erste Bauteil 6 befindet sich in seiner zweiten Position nach der Befestigung. Das Ausgleichselement 1 und der erste Bauteil 6 wirken derart zusammen, dass ein Teil der abschnittsweisen ersten Aktivierungsfläche 12 des Ausgleichselements 1 gegen einen Teil der zweiten Aktivierungsfläche 23 des inneren Umfangs 20 des ersten Bauteils 6 gedrückt wird. Dadurch wird die abschnittsweise Anliegefläche 8 des inneren Umfangs 4 des Ausgleichselements 1 an den zweiten Bauteil 7 gepresst und elastisch verformt.

### Bezugszeichenliste

- 1: Ausgleichselement
- 2: erste Öffnung (des Ausgleichselements)
- 3: zweite Öffnung (des Ausgleichselements)
- 4: innerer Umfang (des Ausgleichselements)
- 5: äußerer Umfang (des Ausgleichselements)
- 6: erster Bauteil
- 7: zweiter Bauteil
- 8: Anliegefläche
- 9: Längsachse
- 10: erste Stauraumfläche
- 11: Wulst
- 12: erste Aktivierungsfläche
- 13: zweite Stauraumfläche
- 14: Abstandshalter
- 15: Platte
- 16: dritter Freiraum
- 17: Fase
- 18: erste Öffnung (des ersten Bauteils)
- 19: zweite Öffnung (des ersten Bauteils)
- 20: innerer Umfang (des ersten Bauteils)
- 21: äußerer Umfang (des ersten Bauteils)
- 22: Vorsprung
- 23: zweite Aktivierungsfläche
- 24: Mantelfläche
- 25: Scheibe
- 26: Mutter
- 27: erster Freiraum
- 28: zweiter Freiraum
- 29: Steg
- 30: Mulde

## Patentansprüche

1. Ausgleichselement (1) zum Toleranzausgleich, zum Schutz und zur Schwingungsdämpfung bei der Befestigung eines ersten Bauteils (6) an einem zweiten Bauteil (7), wobei an einem äußeren Umfang (5) des Ausgleichselements (1) eine Wulst (11) und eine erste, insbesondere konische oder gewölbte, Aktivierungsfläche (12) vorgesehen sind,
**dadurch gekennzeichnet, dass**
am äußeren Umfang des Ausgleichselements (5) alternierend Stege (29) und Mulden (30) vorgesehen sind, oder dass das Ausgleichselement (1) aus Stegen (29) und Mulden (30) gebildet ist, wobei die Wulst (11) und die erste Aktivierungsfläche (12) nur an den Stegen (29) des Ausgleichselements (1) vorgesehen sind.

2. Ausgleichselement (1) nach Anspruch 1, **dadurch gekennzeichnet, dass** am Ausgleichselement (1) mindestens ein Abstandshalter (14), insbesondere mindestens eine Noppe, stirnseitig im Bereich einer ersten Öffnung (2) des Ausgleichselements (1) vorgesehen ist.

3. Ausgleichselement (1) nach einem der Ansprüche 1 oder 2, **dadurch gekennzeichnet, dass** das Ausgleichselement (1) elastisch verformbar ist.

4. Ausgleichselement (1) nach einem der Ansprüche 1 bis 3, **dadurch gekennzeichnet, dass** das Ausgleichselement aus Kunststoff, insbesondere Gummi oder Polyethylen, Metall, insbesondere Federstahl, oder dergleichen ausgeführt ist oder aus einer Kombination dieser Materialien gebildet ist.

5. Ausgleichselement (1) nach einem der Ansprüche 1 bis 4, **dadurch gekennzeichnet, dass** das Ausgleichselement (1) durch ein spiralförmiges und sich kegelig erweiterndes Materialband gebildet ist oder ein derartiges Materialband umfasst, wobei das Materialband vorzugsweise Federstahl umfasst.

6. Ausgleichselement nach einem der Ansprüche 1 bis 5, **dadurch gekennzeichnet, dass** das Ausgleichselement (1) symmetrisch um eine Längsachse (9) aufgebaut ist, wobei an einem inneren Umfang (4) des Ausgleichselements (1) eine Anliegefläche (8) angeordnet ist, wobei die Anliegefläche (8) vorzugsweise im Wesentlichen parallel zur Längsachse (9) ist.

7. Ausgleichselement (1) nach einem der Ansprüche 1 bis 6, **dadurch gekennzeichnet, dass** an einem inneren Umfang (4) des Ausgleichselements (1) eine erste, insbesondere konische, Stauraumfläche (10) vorgesehen ist.

8. Ausgleichselement (1) nach Anspruch 7, **dadurch gekennzeichnet, dass** die erste Stauraumfläche (10) einen Winkel von 5° bis 25°, vorzugsweise 10° bis 20°, besonders bevorzugt 15° mit der Längsachse (9) einschließt.

9. System, umfassend ein Ausgleichselement (1) nach einem der Ansprüche 1 bis 8 sowie einen ersten Bauteil (6), wobei die Wulst (11) und die erste Aktivierungsfläche (12) zur Zusammenwirkung mit einem Vorsprung (22) und einer zweiten, insbesondere konischen oder gewölbten, Aktivierungsfläche (23) an einem inneren Umfang (20) des ersten Bauteils (6) ausgeführt ist, sodass der erste Bauteil (6) in einer ersten Position, insbesondere vor der Befestigung, formschlüssig mit dem Ausgleichselement (1) in Eingriff bringbar ist.

10. System nach Anspruch 9, **dadurch gekennzeichnet, dass** ein Teil der ersten Aktivierungsfläche (12) des äußeren Umfangs (5) des Ausgleichselements (1) zur Zusammenwirkung mit einem Teil der zweiten Aktivierungsfläche (23) des inneren Umfangs (20) des ersten Bauteils (6) ausgeführt ist, sodass in einer zweiten Position des ersten Bauteils (6), insbesondere nach der Befestigung, dieser Teil der ersten Aktivierungsfläche (12) gegen den Teil der zweiten Aktivierungsfläche (23) gedrückt wird.

11. System nach Anspruch 10, **dadurch gekennzeichnet, dass** an einem inneren Umfang (4) des Ausgleichselements (1) eine Anliegefläche (8) derart angeordnet ist, dass sie in der zweiten Position des ersten Bauteils (6) durch das erste Bauteil (6) gegen den zweiten Bauteil (7) gepresst wird.

12. System nach einem der Ansprüche 9 bis 11, **dadurch gekennzeichnet, dass** am inneren Umfang (20) des ersten Bauteils (6) im Anschluss an den Vorsprung (22) eine, insbesondere zurückgesetzte, zweite Stauraumfläche (13) vorgesehen ist, sodass zwischen dem Ausgleichselement (1) und dem ersten Bauteil (6) ein zweiter Freiraum (28) gebildet ist.

13. System nach einem der Ansprüche 9 bis 12, **dadurch gekennzeichnet, dass** der erste Bauteil (6) symmetrisch um die Längsachse (9) sind.

14. System nach einem der Ansprüche 12 oder 13, **dadurch gekennzeichnet, dass** die zweite Stauraumfläche (13) im Wesentlichen parallel zur Längsachse (9) verläuft, oder dass die zweite Stauraumfläche (13) einen Winkel von 0° bis 10°, bevorzugt 0° bis 5°, besonders bevorzugt 3°, mit der Längsachse (9) einschließt.

## Claims

1. A compensating element (1) for tolerance compensation, protection and vibration damping when fastening a first component (6) to a second component (7), wherein a bead (11) and a first, in particular conical or curved, activation surface (12) are provided on an outer circumference (5) of the compensating element (1),
**characterised in that**
ridges (29) and recesses (30) are provided alternately on the outer circumference of the compensating element (5), or **in that** the compensating element (1) is formed from ridges (29) and recesses (30), the bead (11) and the first activation surface (12) being provided only on the ridges (29) of the compensating element (1).

2. The compensating element (1) according to claim 1, **characterised in that** at least one spacer (14), in particular at least one hump, is provided on the compensating element (1) at the end face in the region of a first opening (2) of the compensating element (1).

3. The compensating element (1) according to one of claims 1 or 2, **characterised in that** the compensating element (1) is elastically deformable.

4. The compensating element (1) according to one of claims 1 to 3, **characterised in that** the compensating element is made of plastic, in particular rubber or polyethylene, metal, in particular spring steel, or the like, or is made of a combination of these materials.

5. The compensating element (1) according to one of claims 1 to 4, **characterised in that** the compensating element (1) is formed by a spiral-shaped and conically expanding material strip or comprises such a material strip, the material strip preferably comprising spring steel.

6. The compensating element according to one of claims 1 to 5, **characterised in that** the compensating element (1) is constructed symmetrically about a longitudinal axis (9), a contact surface (8) being arranged on an inner circumference (4) of the compensating element (1), the contact surface (8) preferably being substantially parallel to the longitudinal axis (9).

7. The compensating element (1) according to one of claims 1 to 6, **characterised in that** a first, in particular conical, storage space surface (10) is provided on an inner circumference (4) of the compensating element (1).

8. The compensating element (1) according to claim 7, **characterised in that** the first storage space surface (10) forms an angle of 5° to 25°, preferably 10° to 20°, particularly preferably 15°, with the longitudinal axis (9).

9. A system, comprising a compensating element (1) according to one of claims 1 to 8 and a first component (6), wherein the bead (11) and the first activation surface (12) are configured to cooperate with a projection (22) and a second, in particular conical or curved, activation surface (23) on an inner circumference (20) of the first component (6), so that the first component (6) can be brought into positive engagement with the compensating element (1) in a first position, in particular prior to fastening.

10. The system according to claim 9, **characterised in that** a part of the first activation surface (12) of the outer circumference (5) of the compensating element (1) is configured to cooperate with a part of the second activation surface (23) of the inner circumference (20) of the first component (6), so that in a second position of the first component (6), in particular after fastening, this part of the first activation surface (12) is pressed against the part of the second activation surface (23).

11. The system according to claim 10, **characterised in that** a contact surface (8) is arranged on an inner circumference (4) of the compensating element (1) in such a way that, in the second position of the first component (6), it is pressed against the second component (7) by the first component (6).

12. The system according to one of claims 9 to 11, **characterised in that** a second, in particular recessed, storage space surface (13) is provided on the inner circumference (20) of the first component (6) following the projection (22), so that a second clearance (28) is formed between the compensating element (1) and the first component (6).

13. The system according to one of claims 9 to 12, **characterised in that** the first component (6) is symmetrical about the longitudinal axis (9).

14. The system according to one of claims 12 or 13, **characterised in that** the second storage space surface (13) extends substantially parallel to the longitudinal axis (9) or **in that** the second storage space surface (13) forms an angle of 0° to 10°, preferably 0° to 5°, particularly preferably 3°, with the longitudinal axis (9).

## Revendications

1. Élément de compensation (1) pour la compensation des tolérances, la protection et l'amortissement des vibrations lors de la fixation d'un premier composant (6) sur un deuxième composant (7), un bourrelet (11) et une première surface d'activation (12), en particulier conique ou courbe, étant prévus sur une circonférence extérieure (5) de l'élément de compensation (1),
**caractérisé en ce que**
des nervures (29) et des creux (30) sont prévus alternativement sur la circonférence extérieure de l'élément de compensation (5), ou **en ce que** l'élément de compensation (1) est formé de nervures (29) et de creux (30), le bourrelet (11) et la première surface d'activation (12) étant prévus uniquement sur les nervures (29) de l'élément de compensation (1).

2. Élément de compensation (1) selon la revendication 1, **caractérisé en ce qu'**au moins un espaceur (14), en particulier au moins un bouton, est prévu sur l'élément de compensation (1) sur le côté frontal dans la zone d'une première ouverture (2) de l'élément de compensation (1).

3. Élément de compensation (1) selon l'une des revendications 1 ou 2, **caractérisé en ce que** l'élément de compensation (1) est élastiquement déformable.

4. Élément de compensation (1) selon l'une des revendications 1 à 3, **caractérisé en ce que** l'élément de compensation est formé de matière plastique, en particulier caoutchouc ou polyéthylène, de métal, en particulier acier à ressort, ou similaire ou d'une combinaison de ces matériaux.

5. Élément de compensation (1) selon l'une des revendications 1 à 4, **caractérisé en ce que** l'élément de compensation (1) est formé par une bande de matière en forme de spirale et à expansion conique ou comprend une telle bande de matière, la bande de matière étant de préférence constituée d'acier à ressort.

6. Élément de compensation (1) selon l'une des revendications 1 à 5, **caractérisé en ce que** l'élément de compensation (1) est construit symétriquement autour d'un axe longitudinal (9), une surface d'appui (8) étant disposée sur une circonférence intérieure (4) de l'élément de compensation (1), la surface d'appui (8) étant de préférence sensiblement parallèle à l'axe longitudinal (9).

7. Élément de compensation (1) selon l'une des revendications 1 à 6, **caractérisé en ce qu'**une première surface d'espace de retenue (10), en particulier conique, est prévue sur une circonférence intérieure (4) de l'élément de compensation (1).

8. Élément de compensation (1) selon la revendication 7, **caractérisé en ce que** la première surface d'espace de retenue (10) forme un angle de 5° à 25°, de préférence de 10° à 20°, de manière particulièrement préférée de 15°, avec l'axe longitudinal (9).

9. Système comprenant un élément de compensation (1) selon l'une des revendications 1 à 8 et un premier composant (6), dans lequel le bourrelet (11) et la première surface d'activation (12) sont conçus pour coopérer avec une saillie (22) et une deuxième surface d'activation (23), en particulier conique ou courbe, sur une circonférence intérieure (20) du premier composant (6), de sorte que dans une première position, en particulier avant la fixation, le premier composant (6) peut être amené en engagement positif avec l'élément de compensation (1).

10. Système selon la revendication 9, **caractérisé en ce qu'**une partie de la première surface d'activation (12) de la circonférence extérieure (5) de l'élément de compensation (1) est conçue pour coopérer avec une partie de la deuxième surface d'activation (23) de la circonférence intérieure (20) du premier composant (6), de sorte que dans une deuxième position du premier composant (6), en particulier après la fixation, cette partie de la première surface d'activation (12) est pressée contre la partie de la deuxième surface d'activation (23).

11. Système selon la revendication 10, **caractérisé en ce qu'**une surface de butée (8) est disposée sur une circonférence intérieure (4) de l'élément de compensation (1) de telle sorte que, dans la deuxième position du premier composant (6), elle est pressée contre le deuxième composant (7) par le premier composant (6).

12. Système selon l'une des revendications 9 à 11, **caractérisé en ce qu'**une deuxième surface d'espace de retenue (13), en particulier en creux, est prévue sur la circonférence intérieure (20) du premier composant (6) suivant la saillie (22), de sorte qu'un deuxième espace libre (28) est formé entre l'élément de compensation (1) et le premier composant (6).

13. Système selon l'une des revendications 9 à 12, **caractérisé en ce que** le premier composant (6) est symétrique autour de l'axe longitudinal (9).

14. Système selon l'une des revendications 12 ou 13, **caractérisé en ce que** la deuxième surface d'espace de retenue (13) s'étend sensiblement parallèlement à l'axe longitudinal (9), ou **en ce que** la deuxième surface d'espace de retenue (13) forme un angle de 0° à 10°, de préférence de 0° à 5°, de manière particulièrement préférée de 3°, avec l'axe longitudinal (9).
